# EUROPÄISCHE PATENTSCHRIFT

(11) **EP 3 136 285 B1**
(45) Veröffentlichungstag und Bekanntmachung des Hinweises auf die Patenterteilung: **26.09.2018**
(21) Anmeldenummer: 16176208.3
(22) Anmeldetag: 24.06.2016
(51) Int. Cl.: G06F 21/64, G06F 12/14, G06F 21/78

(54) **VERFAHREN UND SPEICHERMODUL FÜR SICHERHEITSGESCHÜTZTE SCHREIBVORGÄNGE UND/ODER LESEVORGÄNGE AUF DEM SPEICHERMODUL**
METHOD AND MEMORY MODULE FOR SECURITY PROTECTED WRITE AND/OR READ OPERATIONS ON THE MEMORY MODULE
PROCÉDÉ ET MODULE DE STOCKAGE POUR DES PROCESSUS D'ÉCRITURE ET/OU PROCESSUS DE LECTURE PROTÉGÉS SUR LE MODULE DE STOCKAGE

(30) Priorität: 24.08.2015 DE 102015216082
(43) Veröffentlichungstag der Anmeldung: 01.03.2017
(73) Patentinhaber: Siemens Aktiengesellschaft, 80333 München (DE)
(72) Erfinder: Falk, Rainer, 85586 Poing (DE)

(56) Entgegenhaltungen:
- US-A1- 2005 050 342
- US-A1- 2014 137 271

## Beschreibung

Die Erfindung bezieht sich auf ein Verfahren und ein Speichermodul für sicherheitsgeschützte Schreibvorgänge und/oder Lesevorgänge auf dem Speichermodul.

Speicherbausteine werden für das persistente Speichern von Daten verwendet, um neben Programmdaten, wie beispielsweise Firmware oder ein Betriebssystem, Konfigurationsdaten oder Nutzerdaten auf einem Gerät zu speichern. Das Gerät kann beispielsweise ein Feldgerät bzw. ein Steuergerät sein. Dabei werden in der Praxis häufig separate Speichermodule, beispielsweise für die Speicherung der Firmware und der Konfigurationsdaten, verwendet.

Solche Speichermodule können in einem Gerät fest verbaut oder wechselbar sein. Ein Beispiel für ein fest verbautes Speichermodul ist ein verlötetes serielles EEPROM. Wechselbare Speichermodule sind beispielsweise ein sogenanntes C-Plug, ein ID-Plug, eine SD-Karte (engl. SD-Card, Secure Digital Memory Card) oder ein USB-Stick. Diese Speichermodule werden während der Nutzungsdauer eines Gerätes häufig partiell oder vollständig überschrieben, um beispielsweise Konfigurationsdaten eines Feldgeräts zu ändern. Um sicherheitsrelevante Daten, insbesondere sicherheitsrelevante Konfigurationsdaten, beispielsweise auf dem Feldgerät zu schützen, werden häufig Speichermodule verwendet, die nur dann einen Zugriff auf das Speichermodule erlauben, wenn sich der Nutzer zuvor authentisiert hat. Diese sicherheitsgeschützten Speicherbausteine haben insbesondere den Nachteil, dass deren Fertigung deutlich komplexer und teurer ist und dass die Nutzung umständlich ist.

Das Dokument US 2014/0137271 A1 beschreibt ein Speichermodul, das eine zusätzliche Sicherheits-Logikschaltung aufweist, mittels derer verschiedene Sicherheitsfunktionen implementiert sind. Dabei werden mit einem inkrementellen Zähler Speicherzugriffe gezählt und bei zu vielen Speicherzugriffen eine "exception" ausgegeben. Zusätzlich wird mittels Prüfsummen die Integrität der gespeicherten Daten sichergestellt.

Das Dokument US 2005/050342 A1 offenbart ein System zum sicheren Speichern von Daten. Beim Speichern von verschlüsselten Datenblöcken werden dabei Prüfsummen und Versionsnummern des jeweiligen Datenblocks in Meta-Datenblöcken gespeichert, wobei die Integrität der Verschlüsselung dadurch erhöht wird, dass die Speicheradresse Teil eines Verschlüsselungs-Integritätswertes ist.

Die Aufgabe der vorliegenden Erfindung ist es, ein Verfahren und ein Speichermodul mit einfach realisierbaren Sicherheitsfunktionen zur Bereitstellung einer Sicherheitsinformation des Speicherinhalts bereitzustellen.

Die Aufgabe wird durch die in den unabhängigen Ansprüchen angegebenen Merkmale gelöst. In den Unteransprüchen sind vorteilhafte Weiterbildungen der Erfindung dargestellt.

Gemäß einem ersten Aspekt betrifft die Erfindung ein Verfahren für sicherheitsgeschützte Schreibvorgänge und/oder Lesevorgänge auf einem Speichermodul, wobei nachfolgende Verfahrensschritte durchgeführt werden:
- In einem ersten Verfahrensschritt werden Nutzerdaten an das Speichermodul übertragen.
- In einem zweiten Verfahrensschritt werden Sicherheitsinformationen in einem ersten Speicherbereich des Speichermoduls festgelegt.
- In einem dritten Verfahrensschritt wird mindestens ein vordefinierter Teil der Sicherheitsinformation bei einem Schreibzugriff für die Nutzerdaten auf dem Speichermodul und/oder bei einem vorgegebenen Auslöser automatisch mitaktualisiert.

In dem erfindungsgemäßen Verfahren werden zusätzlich nachfolgende Verfahrensschritte durchgeführt: Es wird ein weiterer Verfahrensschritt zum Prüfen des automatisch mitaktualisierten Teils der Sicherheitsinformation mittels eines Prüfalgorithmus anhand eines vordefinierten Prüfkriteriums durchgeführt. Der Prüfalgorithmus kann insbesondere ein kryptographischer Algorithmus sein, beispielsweise die Prüfung einer kryptographischen Prüfsumme, d.h. eines Nachrichtenauthentisierungscodes oder einer digitalen Signatur. Zusätzlich wird in einem weiteren Verfahrensschritt ein Signal bereitgestellt, falls der Prüfalgorithmus eine kritische Abweichung von dem vordefinierten Prüfkriterium festgestellt hat. Das Signal versetzt dabei ein Gerät, in dem das Speichermodul verbaut ist, in einen Sicherheitsmodus.

Hierdurch wird bei einer erkannten Manipulation verhindert, dass weitere Manipulationen an dem Gerät vorgenommen werden. Es ist insbesondere für sicherheitskritische Anlagen wichtig, dass umgehend auf eine erkannte Manipulation in automatisierter Form reagiert wird.

Dabei liegen der erste Speicherbereich und auch die nachfolgend genannten zweiten und dritten Speicherbereiche beispielsweise in einem gemeinsamen oder jeweils in einem eigenen geschützten Adressraum oder Speicherchip des Speichermoduls. Der Speicherchip oder Adressraum weist vorzugsweise Merkmale auf, welche die Sicherheitsanforderungen des jeweiligen Speicherbereichs berücksichtigen. Diese Merkmale sind beispielsweise ein nur einmal beschreibbarer Speicher, ein nur speichermodulintern zugreifbarer Speicher oder ein Nur-Lese-Speicher (engl. ROM, Read-Only-Memory).

Unter "Gerät" ist vorzugsweise ein Gerät, beispielsweise ein Feldgerät mit einem Hauptprozessor zu verstehen, das ein Speichermodul verwendet. Unter Anwendung ist vorzugsweise ein Anwendungsprogramm zu verstehen, welches auf dem Gerät installiert ist und mit dem Speichermodul kommuniziert, oder über eine Schnittstelle des Gerätes oder des Speichermoduls kommuniziert.

Durch das automatische Mitaktualisieren der Sicherheitsinformation bzw. des mindestens einen vordefinierten Teils der Sicherheitsinformation in einem ersten Speicherbereich ist es eindeutig nachvollziehbar, dass ein Schreibzugriff stattgefunden hat. Insbesondere muss nicht der gesamte Speicherinhalt kryptographisch integritätsgeschützt, also in seiner Integrität geschützt, werden, da in jedem Fall anhand der mitaktualisierten Sicherheitsinformation nachvollziehbar ist, dass ein Schreibzugriff stattgefunden hat. Ein Gerät, welches das Speichermodul verwendet, ist beispielsweise in der Lage, diese Sicherheitsinformation abzufragen, um festzustellen, ob ein unberechtigter Schreibzugriff stattgefunden hat. Hierdurch kann einerseits ein einfach realisierbarer Integritätsschutz erreicht werden, und andererseits kann ein besonders hoher Schutz der Nutzerdaten, vorzugsweise Konfigurationsdaten oder sicherheitsrelevante Daten, erreicht werden.

Das Speichermodul muss keine Information abhängig von den geschriebenen Daten bestimmen, beispielsweise eine kryptographische Prüfsumme über den Speicherinhalt. Bei einem solchen Prüfsummenverfahren kann die Implementierung je nach Anwendungsszenario sehr aufwendig sein. Außerdem wäre es weniger flexibel als die vorgeschlagene Lösung, bei der mittels der Sicherheitsinformation eine abprüfbare Information, auch Prüfinformation genannt, festgelegt wird. Diese Sicherheitsinformation in Form beispielsweise des Prüfwertes, kann durch eine externe Anwendung oder durch das Gerät, welches das Speichermodul verwendet, abgefragt werden. Die Bedeutung der Sicherheitsinformation, die beispielsweise auch eine Prüfsumme oder ein einfacher Zähler sein kann, ist nicht durch das Speichermodul vorgegeben. Damit wird eine hohe Flexibilität des Verfahrens erreicht, da der Abfragende, vorzugsweise die Anwendung oder das Gerät, die Sicherheitsinformation selbst interpretieren kann.

Bei einer ersten Ausführungsform wird die gespeicherte Sicherheitsinformation während des Mitaktualisierens überschrieben.

Prinzipiell ist es möglich, dass ein Speichermodul eine Historie der Sicherheitsinformationen in einem Speicher beziehungsweise Speicherbereich des Speichermoduls aufbewahrt. Um jedoch den Speicherbedarf der Sicherheitsinformation möglichst gering zu halten, wird die Sicherheitsinformation beim Mitaktualisieren vorzugsweise jeweils überschrieben. Es ist aber auch denkbar, dass beispielsweise eine vordefinierte Anzahl von Sicherheitsinformationen als Historie gespeichert wird. Beispielsweise kann das Speichermodul die letzten fünf Werte der Sicherheitsinformationen aufbewahren. Dadurch hat ein Gerät oder Anwender die Möglichkeit, die Sicherheitsinformation von vorherigen, weiter zurückliegenden, Schreibvorgängen abzurufen.

Bei weiteren Ausführungsformen des Verfahrens wird zusätzlich zu den Nutzerdaten eine Kennzeichnungsinformation übertragen, wobei die Kennzeichnungsinformation insbesondere Speicheradressen und/oder Dateinamen umfasst, wobei die Sicherheitsinformation insbesondere die Kennzeichnungsinformation umfasst.

Hierdurch lässt sich durch den Anwender oder das Gerät zusätzlich feststellen, welche Daten potentiell bei einem unberechtigten Schreibzugriff verändert wurden. Dies erlaubt es insbesondere Systemadministratoren, bei einer fehlgeschlagenen Prüfung mittels der Sicherheitsinformation die durchgeführten Manipulationen genau zu analysieren.

Bei weiteren Ausführungsformen des Verfahrens erfolgt das Mitaktualisieren der Sicherheitsinformation abhängig von der übertragenen Kennzeichnungsinformation.

Falls das Speichermodul sicherheitskritische und sicherheitsunkritische Informationen speichert, ist es beispielsweise nicht notwendig, die Sicherheitsinformationen bei einem Schreibvorgang für sicherheitsunkritische Daten zu aktualisieren. Dies hat insbesondere den Vorteil, dass das Speichermodul für sicherheitskritische und sicherheitsunkritische Anwendungen verwendet werden kann und ein Gerät nur über ein Speichermodul verfügen muss, da dieses beide Anwendungsszenarien abdeckt.

Bei weiteren Ausführungsformen des Verfahrens werden die Sicherheitsinformationen und/oder die Nutzerdaten durch das Speichermodul bereitgestellt.

Durch das Bereitstellen der Sicherheitsinformation ist es einem Anwender oder einem Gerät, welches das Speichermodul verwendet, möglich, die Sicherheitsinformation abzufragen und diese selbst zu verarbeiten.

Ein Speichermodul kann zusätzlich mit der Fähigkeit ausgestattet werden, die Sicherheitsinformation selbst zu prüfen. Falls eine kritische Abweichung von dem vordefinierten Prüfkriterium festgestellt wird, kann über das Signal, das beispielsweise eine Steuerinformation kodiert, ein Systemadministrator benachrichtigt werden. Alternativ kann beispielsweise das Gerät in einen sicherheitsgeschützten Modus versetzt werden, so dass weitere Manipulationen durch unbefugte Dritte nicht möglich sind.

Bei weiteren Ausführungsformen des Verfahrens umfasst die Sicherheitsinformation eine Identifizierungsinformation für das Speichermodul.

Durch die Identifizierungsinformation ist das verwendete Speichermodul von beispielsweise einem Systemadministrator leicht zu identifizieren, falls dieses eine Manipulation, beispielsweise über eine drahtlose Kommunikationsschnittstelle, an den Administrator gemeldet hat.

Bei weiteren Ausführungsformen des Verfahrens wird das Signal über eine Schnittstelle an eine zentrale Speicherüberwachung übertragen.

Hierdurch ist es möglich, die sicherheitsgeschützten Speichermodule einer Anlage, beispielsweise einer Kraftwerksanlage, zentral zu überwachen und auszuwerten.

Bei weiteren Ausführungsformen des Verfahrens ist der vorgegebene Auslöser jeder Schreibzugriff auf das Speichermodul und/oder ein Abschluss eines Schreibvorgangs auf das Speichermodul und/oder ein Aktivieren eines Schreibmodus für das Speichermodul, wobei der Schreibmodus vorzugsweise mittels einer Passworteingabe initiiert wird. Hierdurch wird erreicht, dass die Sicherheitsinformation auf möglichst flexible Weise mitaktualisierbar ist.

Bei weiteren Ausführungsformen des Verfahrens umfasst der mitzuaktualisierende Teil der Sicherheitsinformation einen Schreibzyklenzählwert, welcher insbesondere als inkrementeller Zähler implementiert wird.

Ein Schreibzyklenzählwert lässt sich sehr einfach implementieren. Zusätzlich ist die Aktualisierung eines Zählwerts ressourcenschonend, so dass keine teuren Berechnungskomponenten in das Speichermodul verbaut werden müssen.

Die Implementierung als inkrementeller Zähler lässt sich besonders einfach umsetzen, da hierfür keine teuren zusätzlichen Systemkomponenten für das Speichermodul verbaut werden müssen.

Bei weiteren Ausführungsformen des Verfahrens umfasst der mitzuaktualisierende Teil der Sicherheitsinformation einen Zufallswert, der vorzugsweise von einem Speichermodulinternen Zufallsgenerator erzeugt wird.

Durch den Zufallswert wird die Sicherheit des Verfahrens noch weiter erhöht, da dieser Zufallswert beispielsweise in einem Aufforderungs-Antwort-Protokoll (engl. Challenge-Response-Protocol) zwischen dem Anfragenden, beispielsweise einem Anwender oder einem Gerät, und dem Speichermodul verwendet werden kann. Dadurch lassen sich insbesondere so genannte Replay-Attacken sowie Rollback-Attacken verhindern.

Bei weiteren Ausführungsformen des Verfahrens umfasst der mitzuaktualisierende Teil der Sicherheitsinformation eine Uhrzeitinformation, die vorzugsweise von einer Speichermodulinternen Echtzeituhr bereitgestellt wird.

Durch die Uhrzeitinformation lässt sich der letzte Schreibzugriff auf einfache Weise feststellen. Insbesondere lässt sich dadurch feststellen, wann beispielsweise ein unberechtigter Dritter Daten auf das Speichermodul geschrieben hat.

Bei weiteren Ausführungsformen des Verfahrens wird eine erste Prüfsumme zur Prüfung der Nutzerdaten durch das Speichermodul bereitgestellt.

Durch die erste Prüfsumme lässt sich nicht nur feststellen, ob ein unberechtigter Dritter Daten auf das Speichermodul geschrieben hat. Zusätzlich lässt sich feststellen, ob die Daten selbst manipuliert wurden.

Bei weiteren Ausführungsformen des Verfahrens liegt in einem zweiten Speicherbereich ein kryptographischer Schlüssel, wobei der zweite Speicherbereich vorzugsweise einmalig beschreibbar ist.

Mit dem kryptographischen Schlüssel lässt sich beispielsweise auf einfache Weise eine Authentisierung des Speichermoduls und/oder eines Anwenders oder eines Gerätes durchführen. Der Anwender oder das Gerät müssen hierzu ebenfalls über den kryptographischen Schlüssel bzw. über einem dem kryptographischen Schlüssel zugeordneten zweiten kryptographischen Schlüssel verfügen oder eine zertifikatbasierte Authentisierung mittels eines symmetrischen oder asymmetrischen kryptographischen Schlüsselpaares durchführen. In einem solchen Anwendungsszenario erstellt beispielsweise das Gerät eine erste digitale Signatur für Daten, die auf das Speichermodul geschrieben werden sollen. Das Speichermodul verwendet vorzugsweise den kryptographischen Schlüssel, beispielsweise einen öffentlichen Schlüssel, um die digitale Signatur oder das digitale Zertifikat zu authentisieren. Um eine möglichst hohe Sicherheit des Verfahrens zu erreichen, ist der zweite Speicherbereich vorzugsweise nur einmalig mit dem kryptographischen Schlüssel beschreibbar. Bei dem zweiten Speicherbereich kann es sich somit beispielsweise um einen Nur-Lese-Speicher handeln.

Bei weiteren Ausführungsformen des Verfahrens wird eine Authentisierung des Speichermoduls und/oder der Nutzerdaten mittels des kryptographischen Schlüssels durchgeführt. Zusätzlich wird zur Authentisierung vorzugsweise ein Aufforderungs-Antwort-Protokoll genutzt, bei dem eine zweite Prüfsumme mittels des kryptographischen Schlüssels über einen Teil der Nutzerdaten oder über die gesamten Nutzerdaten berechnet wird. Zur Authentisierung umfasst vorzugsweise eine Antwort auf die Aufforderung des Aufforderungs-Antwort-Protokolls die Aufforderung selbst und/oder den kryptographischen Schlüssel und/oder einen Teil der Sicherheitsinformation oder die vollständige Sicherheitsinformation oder eine davon abhängig berechneten Antwortwert. Dadurch ist es möglich, den aktuellen Wert der mitaktualisierten Sicherheitsinformation des Speichermoduls manipulationsgeschützt zu ermitteln.

Durch diese Merkmale wird ein deutlich höherer Integritätsschutz der Nutzerdaten auf dem Speichermodul erreicht. Hierdurch lassen sich nicht nur unerlaubte Schreibzugriffe auf das Speichermodul feststellen, sondern auch grundsätzlich Manipulationen an übertragenen Daten, die potentiell während einer Datenübertragung vorkommen können.

Bei weiteren Ausführungsformen des Verfahrens wird ein Integritätswert über alle Daten oder über einen Teil der Daten, insbesondere der Nutzerdaten, des Speichermoduls in einem dritten Speicherbereich des Speichermoduls gespeichert, wobei der Integritätswert insbesondere automatisiert durch das Speichermodul auch bei einem Abspeichern der Nutzerdaten auf dem Speichermodul erzeugt wird, wobei der Integritätswert insbesondere durch das Speichermodul bereitgestellt wird.

Hierdurch ist es möglich, einen Integritätswert über die sicherheitsrelevanten Daten des Speichermoduls bereitzustellen. Einem Anwender oder einem Gerät, beispielsweise einem Feldgerät, ist es möglich, die Datenintegrität auf einfache Weise zu prüfen, indem es diesen Integritätswert vom Speichermodul abruft. Dies ist beispielsweise in Arbeitsumgebungen sinnvoll, in denen potentiell eine hohe Wahrscheinlichkeit besteht, dass Daten auf dem Speichermodul beschädigt oder ungewollt verändert werden können.

Bei weiteren Ausführungsformen des Verfahrens wird bei einer Änderung des Integritätswerts das Mitaktualisieren durchgeführt. Zusätzlich wird eine Integrität der Daten vorzugsweise beim Auslesen geprüft, indem ein weiterer Integritätswert über die gesamten Daten oder einen Teil der Daten gebildet wird. Zusätzlich wird die Integrität bestätigt, wenn vorzugsweise der Integritätswert und der weitere Integritätswert ausreichend übereinstimmen.

Hierdurch ist das Speichermodul in der Lage, die Integrität der Nutzerdaten selbst zu prüfen. Stellt das Gerät fest, dass die Integrität der Nutzerdaten nicht mehr gegeben ist beziehungsweise die Integrität ungültig ist, so kann es beispielsweise Funktionen zur Datensicherung beziehungsweise Datenrestauration oder das Gerät in einen eigensicheren Zustand versetzen.

Bei weiteren Ausführungsformen des Verfahrens umfasst die Antwort zusätzlich den Integritätswert.

Hierdurch lässt sich insbesondere die Sicherheit des Aufforderungs-Antwort-Protokolls deutlich erhöhen, da die Integrität der Nutzerdaten ebenfalls in der Antwort enthalten sind.

Bei weiteren Ausführungsformen des Verfahrens werden die erste Prüfsumme und/oder die zweite Prüfsumme über den Integritätswert gebildet.

Dies hat insbesondere den Vorteil, dass der Integritätswert auf sehr schnelle Art und Weise gebildet wird. Dies ist besonders wichtig, falls das Speichermodul für Hochperformanzanwendungen eingesetzt werden soll, da das Bilden eines Integritätswertes über die gesamten Nutzerdaten zu aufwändig wären.

Bei weiteren Ausführungsformen des Verfahrens liegen der erste Speicherbereich und/oder der zweite Speicherbereich und/oder der dritte Speicherbereich ganz oder teilweise in einem geschützten Speicherbereich, wobei auf den geschützten Speicherbereich durch einen Dritten nur lesend zugegriffen wird.

Ein Speichermodul umfasst vorzugsweise mehrere Speicherbausteine, die über unterschiedliche Speicherbereiche adressierbar sind. Insofern besteht die Möglichkeit, dass der erste Speicherbereich ein eigenständiger Speicherchip im Speichermodul ist. Dadurch, dass auf diese Speicherbereiche beziehungsweise auf diese einzelnen Speicherchips von außerhalb des Speichermoduls nur lesend zugegriffen wird, sind diese vor Veränderungen beziehungsweise unbefugten Veränderungen durch Dritte geschützt.

Gemäß einem weiteren Aspekt betrifft die Erfindung ein Speichermodul, das einen Nutzerdatenspeicher zum Speichern von Nutzerdaten, einen ersten Speicherbereich und mindestens eine Steuereinrichtung umfasst. Die Steuereinrichtung legt eine Sicherheitsinformation in dem ersten Speicherbereich des Speichermoduls fest. Die Steuereinrichtung aktualisiert automatisch mindestens einen vordefinierten Teil der Sicherheitsinformation bei einem Schreibzugriff für die Nutzerdaten auf dem Speichermodul und/oder bei einem vorgegebenen Auslöser mit, wobei das Speichermodul die mitaktualisierte Sicherheitsinformation automatisch bestimmt.

Bei einer ersten Ausführungsform weist das Speichermodul zusätzlich eine Prüfeinrichtung zum Prüfen des automatisch aktualisierten Teils der Sicherheitsinformation anhand eines vordefinierten Prüfkriteriums auf. Zusätzlich umfasst das Speichermodul eine Bereitstellungseinrichtung zum Bereitstellen eines Signals, falls das Prüfen eine ausreichende Abweichung von dem vordefinierten Prüfergebnis ergibt.

Bei einer weiteren Ausführungsform des Speichermoduls umfasst das Speichermodul zusätzlich einen Zufallsgenerator und/oder eine Echtzeituhr.

Bei weiteren Ausführungsformen des Speichermoduls ist das Speichermodul ein EEPROM.

Gemäß einem weiteren Aspekt betrifft die Erfindung ein Computersystem, beispielsweise ein Feldgerät, das ein Speichermodul nach den oben beschriebenen Merkmalen aufweist.

Gemäß einem weiteren Aspekt betrifft die Erfindung ein virtualisiertes Speichermodul entsprechend den oben angegebenen Merkmalen.

Des Weiteren wird ein Computerprogrammprodukt mit Programmbefehlen zur Durchführung des genannten erfindungsgemäßen Verfahrens beansprucht. Zusätzlich wird eine Bereitstellungsvorrichtung zum Speichern und/oder Bereitstellen einer Datenstruktur, die das Computerprogrammprodukt umfasst, beansprucht. Die Bereitstellungsvorrichtung ist beispielsweise ein Datenträger, der das Computerprogrammprodukt speichert und/oder bereitstellt. Alternativ ist die Bereitstellungsvorrichtung beispielsweise ein Computersystem, ein Serversystem, ein Netzwerk, ein Cloud-basiertes Rechnersystem und/oder virtuelles Rechnersystem, welches das Computerprogrammprodukt speichert und/oder bereitstellt. Diese Bereitstellung erfolgt vorzugsweise als Download des vollständigen Computerprogrammprodukts, kann aber beispielsweise auch als partieller Download erfolgen, der aus mehreren Teilen besteht und insbesondere über ein Peer-to-Peer-Netzwerk heruntergeladen wird. Ein solches Computerprogrammprodukt wird beispielsweise unter Verwendung der Bereitstellungsvorrichtung in Form eines Datenträgers in einem System eingelesen und führt die Programmbefehle aus, so dass das erfindungsgemäße Verfahren auf dem Computer zur Ausführung gebracht wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen:
- Figur 1: eine schematische Darstellung eines Feldgerätes nach dem Stand der Technik;
- Figur 2: eine schematische Darstellung eines ersten Ausführungsbeispiels eines Speichermoduls;
- Figur 3: eine schematische Darstellung eines zweiten Ausführungsbeispiels eines Speichermoduls;
- Figur 4: eine schematische Darstellung eines dritten Ausführungsbeispiels eines Speichermoduls;
- Figur 5: ein Ablaufdiagramm eines Ausführungsbeispiels des Verfahrens für sicherheitsgeschützte Schreibund/oder Lesevorgänge auf einem Speichermodul; und
- Figur 6: eine schematische Darstellung eines Feldgerätes mit einem Speichermodul.

In den Figuren sind funktionsgleiche Elemente mit denselben Bezugszeichen versehen, sofern nichts anderes angegeben ist.

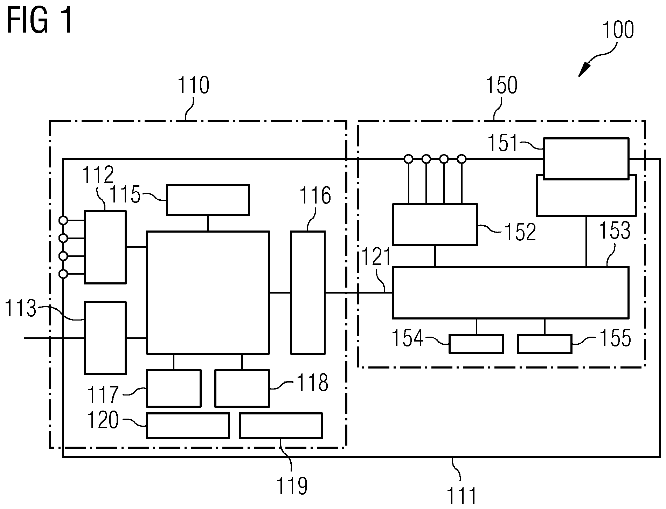

Fig. 1 zeigt eine schematische Darstellung eines Feldgerätes 100, so wie dieses aus dem Stand der Technik bekannt ist. Das Feldgerät ist zunächst in einen ungesicherten Bereich, der als Subsystem 110 bezeichnet ist, und in ein gesichertes Subsystem, das als Sicherheitssubsystem 150 bezeichnet ist, aufgeteilt. Das Subsystem 110 ist mit einem Kommunikationsbus 111 mit dem Sicherheitssubsystem 150 verbunden. Des Weiteren weist das Subsystem 110 des Feldgeräts 100 eine erste Ein-/ Ausgabeschnittstelle 112, eine Netzwerkschnittstelle 113, einen Hauptprozessor 114, einen Konfigurationsspeicher 115, beispielsweise in Form eines EPROM-Speichers, einen DualportArbeitsspeicher (DPRAM) 116, einen ersten Arbeitsspeicher 117, einen ersten Flashspeicher 118, einen Zeitgeber 119 und eine Stromversorgung 120 auf. Das Sicherheitssubsystem 150 umfasst ein Sicherheitskonfigurationsspeichermodul 151, eine zweite Ein-/Ausgabeschnittstelle 152, einen Sicherheitsprozessor 153, einen zweiten Arbeitsspeicher 154 und einen zweiten Flashspeicher 155.

Der Hauptprozessor 114 greift über eine interne Schnittstelle auf den Konfigurationsspeicher 115 zu. Dabei handelt es sich beispielsweise um ein serielles EEPROM. Darüber hinaus verwendet der Hauptprozessor 114 einen flüchtigen Speicher (RAM) als ersten Arbeitsspeicher 117 sowie den ersten Flashspeicher 118 zum Laden von beispielsweise einem Betriebssystem, einem Steuerprogramm oder von anderen Programmbefehlen. Das Subsystem 110 des Feldgeräts 100 hat beispielsweise die Aufgabe mit der Netzwerkschnittstelle 113 mit einem Netzwerk, beispielsweise ein TCP/IP-Netzwerk (Transmission Control Protocol / Internet Protocol), zu kommunizieren, kann aber auch Überwachungs- und Diagnosefunktionen ausführen. Über den Dualportarbeitsspeicher 116 kommuniziert der Hauptprozessor 114 mittels eines Sicherheitsbusses 121 mit dem Sicherheitsprozessor 153 des Sicherheitssubsystems 150. In Fig. 1 ist diese Kommunikation einkanalig (ein Hauptprozessor) dargestellt, es können jedoch auch mehrere redundante Kanäle vorgesehen sein. Über die zweite Ein-/Ausgabeschnittstelle beziehungsweise Sicherheitsschnittstelle 152 können beispielsweise sicherheitskritische Sensoren oder Aktoren angeschlossen werden. Dies kann beispielsweise ein Weichenantriebs- oder ein Achsenzählersensor sein.

Außerdem umfasst das Sicherheitssubsystem 115 eine Sicherheitsschnittstelle, in die das Sicherheitskonfigurationsspeichermodul 151 einsetzbar ist. Auf dem Sicherheitskonfigurationsspeichermodul 151 sind beispielsweise Projektierungsdaten enthalten. Abhängig von der Sicherheitskonfiguration des Feldgeräts 100 führt der Sicherheitsprozessor 153 sicherheitsrelevante Steueroperationen durch.

Hierzu kann der Sicherheitsprozessor 153 Sicherheitsprotokollnachrichten eines Sicherheitsprotokolls erzeugen beziehungsweise bearbeiten. Die Kommunikation mit einem anderen Feldgerät oder einem Zentralrechner erfolgt dann beispielsweise über den Dualportarbeitsspeicher 116 und den Hauptprozessor 114 des Subsystems 110. Hierzu werden beispielsweise Datenpakete über die Netzwerkschnittstelle 113 gesendet und empfangen.

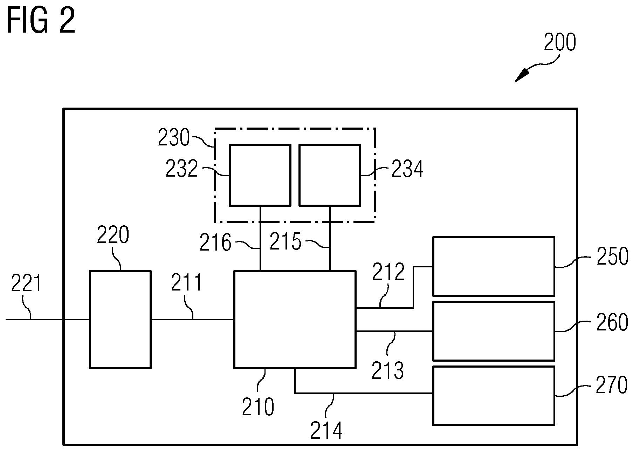

Das in Fig. 1 beschriebene Feldgerät verfügt prinzipiell über drei Speicher. Dies sind der Konfigurationsspeicher (EEPROM), der Flashspeicher und das Sicherheitskonfigurationsspeichermodul. Prinzipiell kann jeder dieser Speicher, Teilmengen dieser Speicher oder alle Speicher ein Speichermodul sein, so wie dies in den Fig. 2 bis 4 beschrieben wird.

Fig. 2 zeigt eine schematische Darstellung eines ersten Ausführungsbeispiels eines Speichermoduls 200 für sicherheitsgeschützte Schreibvorgänge und/oder Lesevorgänge.

Das Speichermodul 200 umfasst eine Steuereinheit 210 mit einem Prozessor, einen internen Bus, eine Speicherschnittstelle 220, einen zweiten Bus 221, eine Sicherheitsinformation in einem ersten Speicherbereich 230, eine Identifizierungsinformation 232, eine Schreibzyklen-Identifizierungsinformation 234, eine Zugriffstabelle 250, einen Geräteschlüssel 260 und einen Nutzerdatenspeicher 270, der Daten persistent speichert. Die Speichersteuereinheit 210 ist über einen internen Bus, der beispielsweise in einen ersten Subbus 211, zweiten Subbus 212, dritten Subbus 213, vierten Subbus 214, fünften Subbus 215 und sechsten Subbus 216 aufgeteilt sein kann, mit dem ersten Speicherbereich 230, der Zugriffstabelle 250, dem Geräteschlüssel 260 und dem Nutzerspeicher 270 verbunden. Die Identitätsinformation 232, die beispielsweise ein Identifizierer des Speichermoduls 100 ist, und die Schreibzyklenidentifizierungsinformation 234 sind Teile einer Sicherheitsinformation, die in dem ersten Speicherbereich 230 des Speichermoduls 100 abgelegt und vorzugsweise jeweils über einen eigenen Subbus, dem fünften Subbus 215 und dem sechsten Subbus 216, mit der Speichersteuereinheit 210 verbunden sind.

Die Speicherschnittstelle 220 und der Bus 221 werden dazu verwendet, um mit einem Prozessor, beispielsweise einem Hauptprozessor eines Gerätes oder Feldgerätes, zu kommunizieren. Über die Speicherschnittstelle 220 beziehungsweise den Bus 221 können Befehle wie beispielsweise Lesebefehle, Schreibbefehle, ein Befehl zum Auslesen eines Identifizierers, ein Prüfbefehl oder ein Eingabebefehl für ein Passwort an das Speichermodul 200 übertragen werden.

Das Speichermodul 200 antwortet dann auf diese Befehle, beispielsweise mit einer Bestätigung der Anfrage oder schickt Daten an den Anfragenden. Die Speichersteuereinheit 210 greift dabei auf den eigentlichen Nutzerdatenspeicher 270 zu, in dem beispielsweise Konfigurationsdaten ablegbar sind. Mit dem Geräteschlüssel 260 kann eine Authentisierung eines Nutzers, beispielsweise der Hauptprozessor des Gerätes, durch das Speichermodul 200 erfolgen. In der Zugriffstabelle 250 ist beispielsweise vorgebbar, unter welchen Bedingungen Speicherbereiche des Nutzerdatenspeichers 270 lesbar beziehungsweise schreibbar sind.

Bei einem Schreibzugriff wird die Schreibzyklen-Identifizierungsinformation 234 aktualisiert. Dies kann bei jedem Schreibzugriff erfolgen, beim Aktivieren einer Schreibzugriffsmöglichkeit mittels eines Befehls, beispielsweise durch eine Passworteingabe, bei Abschluss eines Schreibvorgangs, nach Ablauf eines vorgegebenen Zeitintervalls, durch einen Rücksetzbefehl (engl. Reset-Befehl), beispielsweise für eine bestimmte Speicheradresse, oder einen Abschluss einer Schreibzugriffsmöglichkeit, die durch einen Befehl, wie einen Befehl zur Passworteingabe vorzugsweise mit einem leeren Passwortparameter, durchgeführt wird. Ebenso ist es möglich, dass bei jedem Schreibzugriff (also einem Schreibbefehl) eine Aktualisierung erfolgt.

Die Schreibzyklen-Identifizierungsinformation 234 kann auf unterschiedliche Weise implementiert werden. Es ist beispielsweise möglich, dass ein Zähler inkrementiert wird.

In einer anderen Variante wird die Schreibzyklen-Identifizierungsinformation 234 mit einem Zufallswert gesetzt. In diesem Fall weist das Speichermodul 200 zusätzlich einen Zufallsgenerator auf.

Alternativ umfasst das Speichermodul 200 eine interne Echtzeituhr, so dass die Schreibzyklen-Identifizierungsinformation 234 abhängig von der aktuellen Uhrzeit bestimmt werden kann.

Nachfolgend wird der prinzipielle Ablauf einer Kommunikation zwischen einem Prozessor eines Feldgeräts und dem Speichermodul 200 erläutert.

Zunächst sendet ein Prozessor, beispielsweise der Hauptprozessor des Feldgerätes, an das Speichermodul 200 einen Lesebefehl für eine bestimmte Speicheradresse. Sofern die Speicheradresse in einem unkritischen beziehungsweise ungeschützten Bereich liegt, liefert das Speichermodul die Daten und eine Bestätigungsmeldung an den Prozessor zurück. Der Prozessor fragt in einem weiteren Schritt die Sicherheitsinformation 230, also die Identifizierungsinformation und die Schreibzyklen-Identifizierungsinformation 234, mit einem Befehl von dem Speichermodul 200 ab. Der Prozessor prüft diese Information und, sofern diese korrekt ist, übermittelt er ein Passwort an das Speichermodul 200, um den Schreibmodus des Speichermoduls 200 zu aktivieren. Wenn das Speichermodul 200 die Korrektheit des Passworts bestätigt hat, schickt der Prozessor des Feldgeräts einen Schreibbefehl mit Daten und der gewünschten Speicheradresse, an welche die Daten geschrieben werden sollen, an das Speichermodul 200. Das Speichermodul 200 aktualisiert die Schreibzyklen-Identifizierungsinformation 234 während des Schreibens der Daten automatisch. Nach erfolgreichem Abschluss des Schreibens der Daten und der Aktualisierung der Schreibzyklen-Identifizierungsinformation 234 wird dies gegenüber dem Prozessor bestätigt. Der Prozessor kann nun wiederum die Sicherheitsinformation von dem Speichermodul 200 abfragen. Das Speichermodul stellt die aktualisierte Sicherheitsinformation, also die aktualisierte Schreibzyklenidentifizierungsinformation 234, dem Prozessor bereit. Der Prozessor, beziehungsweise das Feldgerät, kann die Sicherheitsinformationen prüfen um festzustellen, ob die Daten korrekt geschrieben wurden.

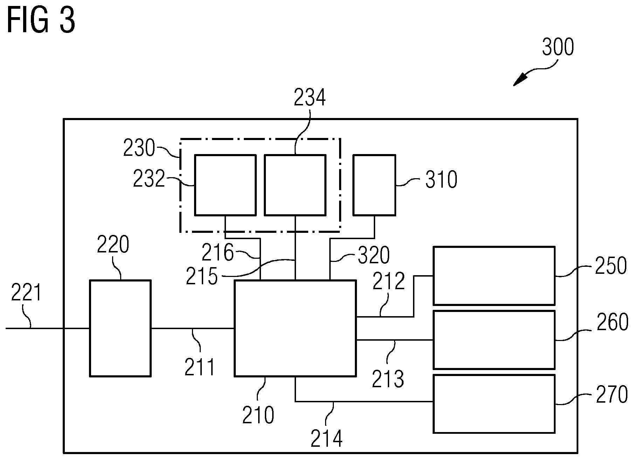

Fig. 3 zeigt eine schematische Darstellung eines zweiten Ausführungsbeispiels eines Speichermoduls 300. Bei diesem Ausführungsbeispiel wird das Speichermodul, das in der Beschreibung zu Fig. 2 erläutert wurde, um einen zweiten Speicherbereich 310 für einen kryptographischen Schlüsselspeicher erweitert. Der zweite Speicherbereich 310 ist beispielsweise über einen siebten Subbus 317 mit der Speichersteuereinheit 210 verbunden.

Im Einzelnen verfügt das Speichermodul 300 mittels des zweiten Speicherbereichs 310 über einen kryptographischen Schlüssel, der in diesem abgelegt ist. Dieser ist vorzugsweise als einmal beschreibbarer Speicher, beispielsweise ein OTP-Speicher (engl. one time programmable), realisiert. Mit diesem kann eine Authentisierung des Speichermoduls 300 erfolgen. Hierzu sendet ein Gerät (oder Nutzer), welches das Speichermodul 300 verwendet, beispielsweise ein Authentisierungskommando, welches das Aufforderungs-Antwort-Protokoll (engl. Challenge-Response-Protocol) nutzt. Dazu berechnet die Speichersteuereinheit 210 vorzugsweise eine kryptographische Prüfsumme, beispielsweise einen Nachrichtenauthentifizierungscode (engl. Message Authentication Code) unter Verwendung des kryptographischen Schlüssels.

Zur Berechnung des Nachrichtenauthentifizierungscodes können Verfahren wie HMAC-SHA256 (Keyed-Hash Message Authentication Code - Secure Hash Algorithm), AES-CBCMAC (Advanced Encryption Standard - Cipher Block Chaining Message Authentication Code), oder eine digitale Signatur EC-DSA (Elliptic Curve Digital Signature Algorithm) verwendet werden. Die kryptographische Prüfsumme kann entweder nur über einen bestimmten Speicherbereich des Speichermoduls 300, über alle Nutzerdaten oder über die abgefragten Nutzerdaten berechnet werden.

Bei einer Authentisierung empfängt das Speichermodul 300 mittels des Aufforderungs-Antwort-Protokolls eine Aufforderung (engl. Challenge) vom Anfragenden. Die Speichersteuereinheit 210 erzeugt dann eine Antwort (engl. Response), in welche als Parameter vorzugsweise die Aufforderung und/oder die kryptographische Prüfsumme und/oder die Identifizierungsinformation 232 und/oder die Schreibzyklen-Identifizierungsinformation 234 eingeht. Die ermittelte Antwort wird dann vom Speichermodul 300 bereitgestellt, sodass sie von dem Feldgerät, dem System oder der Anwendung überprüfbar ist.

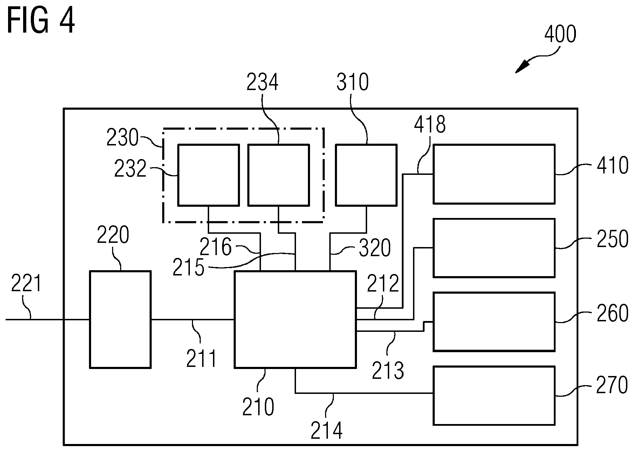

Fig. 4 zeigt eine schematische Darstellung eines dritten Ausführungsbeispiels eines Speichermoduls 400. Bei diesem Ausführungsbeispiel wird das Speichermodul, das durch die Beschreibung zu Fig. 3 erläutert wurde, um einen dritten Speicherbereich 410 für einen Integritätsprüfsummenspeicher erweitert. Der dritte Speicherbereich 410 ist beispielsweise über einen achten Subbus 418 mit der Speichersteuereinheit 210 verbunden.

Dieser dritte Speicherbereich 410 ist dafür vorgesehen, einen Integritätswert vorzugsweise in Form einer Integritäts-Prüfsumme zu speichern. Im Einzelnen wird die Schreibzyklen-Identifizierungsinformation 234 nur beim Schreiben auf diesen dritten Speicherbereich 410 aktualisiert.

Vorzugsweise kann ein System, Anwender oder ein Prozessor eines Geräts in den dritten Speicherbereich 410 einen Integritätswert über Daten des Speichermoduls, beispielsweise Nutzerdaten vorzugsweise in der Form einer Konfigurationsdatei, von Sicherheitsinformationen oder von Konfigurationsdaten, schreiben. Der Integritätswert kann beispielsweise mit dem SHA256 (Secure Hash Algorithm) Algorithmus gebildet werden. Beim Schreiben auf diesen dritten Speicherbereich 410 wird die Schreibzyklen-Identifizierungsinformation 234 aktualisiert, um die Veränderungen an dem Integritätswert überprüfbar zu machen.

Beim Lesen von Daten aus dem Speichermodul 400, beispielsweise durch den Prozessor eines Geräts, ermittelt der Prozessor den Integritätswert der gelesenen Daten und vergleicht ihn mit dem Wert in dem dritten Speicherbereich 410. Diese müssen übereinstimmen, damit die gelesenen Daten als gültig erkannt werden.

Außerdem authentisiert beispielsweise der Prozessor des Geräts das Speichermodul 400 mit einem Authentisierungskommando und einer Aufforderung des Aufforderung-Antwort-Protokolls. Das Speichermodul 400 berechnet eine Antwort, die als Parameter den Integritätswert, der im dritten Speicherbereich 410 gespeichert ist, umfasst. Zusätzlich kann die Antwort ebenfalls die Aufforderung und/oder die kryptographische Prüfsumme und/oder die Identifizierungsinformation 232 und/oder die Schreibzyklen-Identifizierungsinformation 234 umfassen.

Mit anderen Worten gehen in die Antwort zur Authentisierung des Speichermoduls 400 die Informationen ein, die in der Beschreibung zu Fig. 3 erläutert wurden. Zusätzlich geht in die Antwort aber noch der Integritätswert ein.

Dieses Ausführungsbeispiel des Speichermoduls 400 hat den Vorteil, dass ein authentisierter, nicht manipulierter Integritätswert über den Speicherinhalt abspeicherbar ist. Es müssen hierbei nur kryptographische Berechnungen in einem geringen Umfang durchgeführt werden. Das Speichermodul 400 muss die kryptographische Prüfsumme nur über eine feste, geringe Datenmenge durchführen und muss deshalb den Integritätswert nicht über den eigentlichen Speicherinhalt selbst ermitteln. Dies kann beispielsweise der Prozessor des Geräts durchführen, welches das Speichermodul 400 verwendet. Dazu verwendet der Prozessor den durch das Speichermodul 400 geschützten dritten Speicherbereich 410 des Speichermoduls 400, um den Integritätswert zu speichern.

Durch Verwendung der Schreibzyklen-Identifizierungsinformation 234 ist eine Sicherheitsinformation, die als Aktualitätsinformation angesehen werden kann, verfügbar, wenn der Speicherinhalt des dritten Speicherbereichs 410 geschrieben wurde. Insbesondere ist anhand einer geänderten Schreibzyklen-Identifizierungsinformation 234 erkennbar, ob ein Schreibvorgang erfolgt ist.

In einem Anwendungsszenario, bei dem das Speichermodul 400 als Sicherheits-Konfigurationsspeicher verwendet wird, ist anhand einer geänderten Schreibzyklen-Identifizierungsinformation 234 somit erkennbar, dass ein Schreibvorgang stattgefunden hat. Dies kann beispielsweise von einem Sicherheitsprozessor eines Sicherheitssubsystems geprüft werden. Falls ein Schreibvorgang stattgefunden hat, kann unabhängig davon, ob bzw. wie der Speicherinhalt geändert wurde, nach einem Schreibvorgang eine erneute Sicherheitsfreigabe des Gerätes, welches das Speichermodul 400 verwendet, durch einen Nutzer erforderlich sein.

In einer Variante kann die Schreibzyklen-Identifizierungsinformation 234 des dritten Speicherbereichs auch für die Speicherung eines Geräte-Identifizierers, beispielsweise eines Steuergerätes oder Feldgerätes, verwendet werden. Dazu wird in den dritten Speichebereich 410 ein von einem Nutzer wählbarer Identifizierer geschrieben, beispielsweise eine frei wählbare Zeichenkette. Diese wird um eine zufällig vom Speichermodul 400 gewählte Schreibzyklen-Identifizierungsinformation 234 ergänzt, um eine authentisierbare Identifizierungsinformation zu bilden. Diese besteht, durch einen Hardware-Mechanismus geschützt, aus einem von einem Nutzer wählbaren Teil und einem nicht vorgebbaren Teil. Dadurch kann ein Nutzer nicht einen identischen Geräte-Identifizierer eines anderen Gerätes nachbilden, obwohl der Identifizierer ansonsten frei wählbar ist.

In einer weiteren Variante ist ein Lesezugriff und/oder Schreibzugriff auf den dritten Speicherbereich durch Sicherheitsfunktionen, beispielsweise eine Passworteingabe oder eine Authentisierung mit kryptographischem Schlüssel, geschützt.

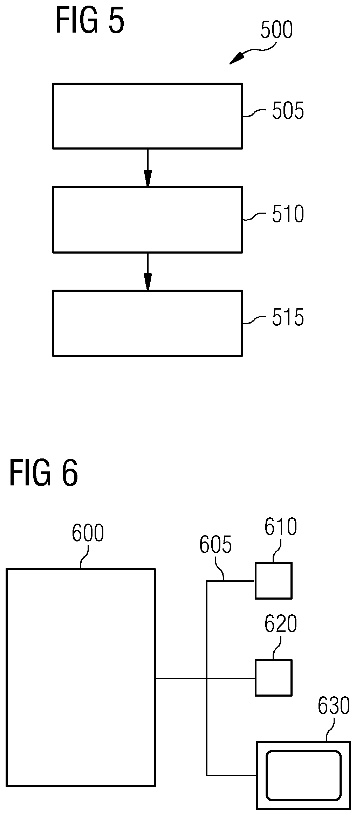

Figur 5 zeigt ein Ablaufdiagramm eines Ausführungsbeispiels des Verfahrens für sicherheitsgeschützte Schreib- und/oder Lesevorgänge auf einem Speichermodul.

Es wird vorgeschlagen, dass eine Sicherheitsinformation eines Speichermoduls bei einem Schreibvorgang mitaktualisiert wird. Die Sicherheitsinformation besteht vorzugsweise aus einem festen unveränderlichen Teil, beispielsweise einer Identifizierungsinformation des Speichermoduls, und/oder aus einem variablen Teil, beispielsweise eine Schreibzyklen-Identifizierungsinformation, die bei einem Schreibvorgang auf den Inhalt des Speichermoduls bzw. eines Nutzerdatenspeichers des Speichermoduls automatisch aktualisiert wird.

Das Aktualisieren der Sicherheitsinformation bei einem Schreibvorgang kann dabei anhand verschiedener Auslöser gesteuert werden. Im einfachsten Fall wird beispielsweise bei allen Schreibvorgängen, die den ganzen Speicherinhalt betreffen, die Sicherheitsinformation aktualisiert. Vorzugsweise wird das Aktualisieren aber nur dann ausgelöst, wenn auf einen speziellen Teilbereich, auch geschützter Speicherbereich genannt, des insgesamt vorhandenen Speicherbereichs des Speichermoduls geschrieben wird.

In einer Variante lässt sich dieser geschützte Speicherbereich konfigurieren. Eine solche Konfiguration eines auf diese Weise geschützten Speicherbereichs kann entweder einmalig konfigurierbar sein, beispielsweise bei der erstmaligen Verwendung des Speichermoduls, oder dieser geschützte Speicherbereich kann in einem speziellen Betriebsmodus konfiguriert werden. Dieser Betriebsmodus kann beispielsweise durch eine Nutzernamen- und Passworteingabe, einen speziellen Software- oder Hardwareschalter des Speichermoduls, beispielsweise einen Jumper, oder durch eine Konfigurationsinformation konfiguriert werden, die mit einer digitalen Signatur abgesichert wurde, wobei der Schlüssel zum Prüfen der Signatur beispielsweise im zweiten Speicherbereich abgelegt ist.

Zusätzlich kann ein dritter Speicherbereich als Integritätsprüfsummenspeicher vorgesehen sein. In diesen wird ein Integritätswert geschrieben. Beispielsweise ein Prüfsummenwert-Wert von übertragenen Nutzerdaten, insbesondere von einem Konfigurationsparameter, oder von Daten auf dem Speichermodul.

Dabei wird die Sicherheitsinformation, beispielsweise die Schreibzyklen-Identifizierungsinformation insbesondere in Form eines Schreibzyklenzählwertes, des Speichers aktualisiert. Die Schreibzyklen-Identifizierungsinformation und deren Aktualisierung können auf unterschiedliche Weise implementiert werden. Es kann beispielsweise ein Zählerwert inkrementieren oder zufällig gewählt werden. Es kann zusätzlich oder für sich alleine genommen auch eine Prüfsumme über die alte Schreibzyklen-Identifizierungsinformation oder über die alte Schreibzyklen-Identifizierungsinformation und die neue Schreibzyklen-Identifizierungsinformation gebildet werden.

Es kann dann der Integritätswert überprüft werden. Dazu bestimmt das Speichermodul eine kryptographische Prüfsumme, beispielsweise einen Nachrichtenauthentifizierungscode, in die der aktuelle Wert eines Schreibzyklenzählwertes eingeht. Dieser Schreibzyklenzählwert kann beispielsweise ein einfacher Zähler sein, der bei jedem Schreibzugriff inkrementiert wird.

In einer Variante werden unterschiedliche Schreibzugriffe unterschieden, beispielsweise ein Überschreiben mit einem Schreibkommando, ein Löschen des Speichers oder einen Befehl zum Tamper-Löschen. Ein Aktualisieren kann dabei in einer Variante nur bei bestimmten Schreibzugriffsarten erfolgen.

In einer anderen Variante ist die Schreibzyklen-Identifizierungsinformation in mehrere Teile strukturiert. Bei einem bestimmten Schreibzugriff kann dabei ein bestimmter Teil der Schreibzyklen-Identifizierungsinformation aktualisiert werden.

Durch ein Prüfen der Schreibzyklen-Identifizierungsinformation ist erkennbar, ob ein Schreibzugriff erfolgte. Durch Prüfen der kryptographischen Prüfsumme kann ein erfolgter Schreibzugriff auch nachträglich hinsichtlich einer Manipulation überprüft werden.

Die Schreibzyklen-Identifizierungsinformation kann von einem Gerät, welches das Speichermodul verwendet, selbst geprüft werden. Bei Abweichung von einem Prüfkriterium, z.B. Überschreiben einer Sicherheitskonfiguration, kann das Gerät sich sperren, sodass es erst wieder von einem Administrator freigeschaltet werden muss.

Es ist außerdem möglich, die Schreibzyklen-Identifizierungsinformation von dem Gerät an ein zentrales Überwachungssystem zu übertragen, beispielsweise als Teil von Diagnose-Daten oder Log-Daten. Dadurch ist zentral erkennbar, wenn der Speicherinhalt eines Speichermoduls beschrieben wurde. Dies ist selbst dann erkennbar, wenn der ursprüngliche Speicherinhalt beispielsweise nach einer Manipulation einer Anlage wiederhergestellt wurde, da die Sicherheitsinformation, insbesondere die Schreibzyklen-Identifizierungsinformation und die Identifizierungsinformation, des Speichermoduls nur durch das Speichermodul selbst geändert werden kann und nicht durch Dritte, beispielsweise ein Anwendungsprogramm, Nutzer oder Gerät, von außen.

Mit anderen Worten betrifft die Erfindung ein Verfahren für sicherheitsgeschützte Schreibvorgänge und/oder Lesevorgänge auf einem Speichermodul.

In diesem Verfahren werden in einem ersten Verfahrensschritt 505 Nutzerdaten, beispielsweise Konfigurationsdaten, von einem Gerät, welches das Speichermodul verwendet, an das Speichermodul übertragen.

In einem zweiten Verfahrensschritt 510 werden Sicherheitsinformationen in einem ersten Speicherbereich des Speichermoduls festgelegt. Dieses Festlegen kann beispielsweise während der Fertigung des Speichermoduls geschehen oder bei der ersten Verwendung des Speichermoduls durch einen Administrator konfiguriert werden.

In einem dritten Verfahrensschritt 515 wird mindestens ein vordefinierter Teil der Sicherheitsinformation bei einem Schreibzugriff für Nutzerdaten auf dem Speichermodul und/oder bei einem vorgegebenen Auslöser automatisch mitaktualisiert, wobei das Speichermodul die mitaktualisierte Sicherheitsinformation automatisch bestimmt.

Figur 6 zeigt eine schematische Darstellung eines Feldgerätes 600 mit einem Speichermodul.

Das Feldgerät weist ein Speichermodul nach einem der genannten Ausführungsbeispiele auf. Zusätzlich umfasst das Feldgerät 600 einen Sensor 610, einen Aktor 620, beispielsweise in Form eines Weichenantriebs und ein Anzeigegerät 630, wobei diese Elemente des Feldgerätes 600 über einen Datenbus 605 miteinander kommunikativ verbunden sind.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren (500) für sicherheitsgeschützte Schreibvorgänge und/oder Lesevorgänge auf einem Speichermodul (200, 300, 400), wobei folgende Verfahrensschritte durchgeführt werden:
- Übertragen (505) von Nutzerdaten an das Speichermodul (200, 300, 400);
- Festlegen (510) einer Sicherheitsinformation in einem ersten Speicherbereich (230) des Speichermoduls (200, 300, 400); und
- automatisches Mitaktualisieren (515) mindestens eines vordefinierten Teils der Sicherheitsinformation bei einem Schreibzugriff für die Nutzerdaten auf dem Speichermodul (200, 300, 400) und/oder bei einem vorgegebenen Auslöser, wobei das Speichermodul (200, 300, 400) die mitaktualisierte Sicherheitsinformation automatisch bestimmt;
- Prüfen des automatisch mitaktualisierten Teils der Sicherheitsinformation mittels eines Prüfalgorithmus anhand eines vordefinierten Prüfkriteriums; und
- Bereitstellen eines Signals, falls der Prüfalgorithmus eine kritische Abweichung von dem vordefinierten Prüfkriterium feststellt,
wobei ein Integritätswert über alle Daten oder über einen Teil der Daten, insbesondere der Nutzerdaten, des Speichermoduls (400) in einem dritten Speicherbereich (410) des Speichermoduls (400) gespeichert wird, wobei der Integritätswert insbesondere automatisiert durch das Speichermodul (400) bei einem Abspeichern der Nutzerdaten auf dem Speichermodul (400) erzeugt wird, wobei der Integritätswert insbesondere durch das Speichermodul (400) bereitgestellt wird,
**dadurch gekennzeichnet, dass**
das Signal ein Gerät (600), in dem das Speichermodul (200, 300, 400) verbaut ist, in einen Sicherheitsmodus versetzt.

2. Verfahren (500) nach Anspruch 1, wobei die gespeicherte Sicherheitsinformation während des Mitaktualisierens (515) überschrieben wird.

3. Verfahren (500) nach Anspruch 1 oder 2, wobei
- zusätzlich zu den Nutzerdaten eine Kennzeichnungsinformation übertragen wird,
- die Kennzeichnungsinformation insbesondere Speicheradressen und/oder Dateinamen umfasst, und
- die Sicherheitsinformation insbesondere die Kennzeichnungsinformation umfasst.

4. Verfahren (500) nach Anspruch 3, wobei das Mitaktualisieren (515) der Sicherheitsinformation abhängig von der übertragenen Kennzeichnungsinformation erfolgt.

5. Verfahren (500) nach einem der vorhergehenden Ansprüche, wobei die Sicherheitsinformation und/oder die Nutzerdaten durch das Speichermodul (200, 300, 400) bereitgestellt werden.

6. Verfahren (500) nach einem der vorhergehenden Ansprüche, wobei die Sicherheitsinformation eine Identifizierungsinformation (232) für das Speichermodul (200, 300, 400) umfasst.

7. Verfahren (500) nach einem der vorhergehenden Ansprüche, wobei das Signal über eine Schnittstelle an eine zentrale Speicherüberwachung übertragen wird.

8. Verfahren (500) nach einem der vorhergehenden Ansprüche, wobei der vorgegebene Auslöser jeder Schreibzugriff auf das Speichermodul (200, 300, 400) ist und/oder ein Abschluss eines Schreibvorgangs auf das Speichermodul (200, 300, 400) ist und/oder ein Aktivieren eines Schreibmodus für das Speichermodul ist, wobei der Schreibmodus vorzugsweise mittels einer Passworteingabe initiiert wird.

9. Verfahren (500) nach einem der vorhergehenden Ansprüche, wobei der mitzuaktualisierende Teil der Sicherheitsinformation eine Schreibzyklen-Identifizierungsinformation (234) umfasst, welcher insbesondere als inkrementeller Zähler implementiert wird.

10. Verfahren (500) nach einem der vorhergehenden Ansprüche, wobei der mitzuaktualisierende Teil der Sicherheitsinformation einen Zufallswert umfasst, der vorzugsweise von einem speichermodulinternen Zufallsgenerator erzeugt wird.

11. Verfahren (500) nach einem der vorhergehenden Ansprüche, wobei der mitzuaktualisierende Teil der Sicherheitsinformation eine Uhrzeitinformation umfasst, die vorzugsweise von einer speichermodulinternen Echtzeituhr bereitgestellt wird.

12. Verfahren (500) nach einem der vorhergehenden Ansprüche, wobei eine erste Prüfsumme zur Prüfung der Nutzerdaten durch das Speichermodul (300, 400) bereitgestellt wird.

13. Verfahren (500) nach einem der vorhergehenden Ansprüche, wobei in einem zweiten Speicherbereich ein kryptographischer Schlüssel liegt, wobei der zweite Speicherbereich (310) vorzugsweise einmalig beschreibbar ist.

14. Verfahren (500) nach Anspruch 13, wobei
- eine Authentisierung des Speichermoduls (300, 400) und/oder der Nutzerdaten mittels des kryptographischen Schlüssels durchgeführt wird,
- zur Authentisierung vorzugsweise ein Aufforderungs-Antwortprotokoll genutzt wird, bei dem eine zweite Prüfsumme mittels des kryptographischen Schlüssels über einen Teil der Nutzerdaten oder über die gesamten Nutzerdaten berechnet wird, und
- zur Authentisierung vorzugsweise eine Antwort auf eine Aufforderung des Aufforderungs-Antwortprotokolls die Aufforderung und/oder den kryptographischen Schlüssel und/oder einen Teil der Sicherheitsinformation oder die vollständige Sicherheitsinformation umfasst.

15. Verfahren (500) nach einem der vorhergehenden Ansprüche, wobei
- bei einer Änderung des Integritätswertes das Mitaktualisieren (515) durchgeführt wird,
- eine Integrität der Daten vorzugsweise beim Auslesen geprüft wird, indem ein weiterer Integritätswert über die gesamten Daten oder über den Teil der Daten gebildet wird, und
- die Integrität bestätigt wird, wenn vorzugsweise der Integritätswert und der weitere Integritätswert ausreichend übereinstimmen.

16. Verfahren (500) nach einem der vorhergehenden Ansprüche, wobei die Antwort zusätzlich den Integritätswert umfasst.

17. Verfahren (500) nach einem der Ansprüche 12 - 16, wobei die erste Prüfsumme und/oder die zweite Prüfsumme nur über den Integritätswert gebildet werden.

18. Verfahren (500) nach einem der vorhergehenden Ansprüche, wobei der erste Speicherbereich (230) und/oder der zweite Speicherbereich (310) und/oder der dritte Speicherbereich (410) ganz oder teilweise in einem geschützten Speicherbereich liegen, und wobei auf den geschützten Speicherbereich durch einen Dritten nur lesend zugegriffen wird.

19. Speichermodul (200, 300, 400), aufweisend:
- einen Nutzerdatenspeicherbereich (270) zum Speichern von Nutzerdaten;
- einen ersten Speicherbereich (230);
- mindestens eine Steuerungseinrichtung (210) zum Festlegen einer Sicherheitsinformation in dem ersten Speicherbereich (230) des Speichermoduls (200, 300, 400) und zum automatischen Mitaktualisieren mindestens eines vordefinierten Teils der Sicherheitsinformation bei einem Schreibzugriff für die Nutzerdaten auf dem Speichermodul (200, 300, 400) und/oder bei einem vorgegebenen Auslöser, wobei das Speichermodul die mitaktualisierte Sicherheitsinformation automatisch bestimmt,
- eine Prüfeinrichtung zum Prüfen des automatisch aktualisierten Teils der Sicherheitsinformation anhand eines vordefinierten Prüfkriteriums; und
- eine Bereitstellungseinrichtung zum Bereitstellen eines Signals, falls das Prüfen eine ausreichende Abweichung von dem vordefinierten Prüfergebnis ergibt,
wobei ein Integritätswert über alle Daten oder über einen Teil der Daten, insbesondere der Nutzerdaten, des Speichermoduls (400) in einem dritten Speicherbereich (410) des Speichermoduls (400) gespeichert wird, wobei der Integritätswert insbesondere automatisiert durch das Speichermodul (400) bei einem Abspeichern der Nutzerdaten auf dem Speichermodul (400) erzeugt wird, wobei der Integritätswert insbesondere durch das Speichermodul (400) bereitgestellt wird,
**dadurch gekennzeichnet, dass**
die Bereitstellungseinrichtung dazu eingerichtet ist, ein Signal bereitzustellen, das ein Gerät (600), in dem das Speichermodul (200, 300, 400) verbaut ist, in einen Sicherheitsmodus versetzt.

20. Speichermodul (200, 300, 400) nach einem der Ansprüche 18 - 19, zusätzlich aufweisend:
- einen Zufallsgenerator und/oder
- eine Echtzeituhr.

21. Speichermodul (200, 300, 400) nach einem der Ansprüche 18 - 20, wobei das Speichermodul ein EEPROM ist.

22. Computersystem (600) mit einem Speichermodul nach einem der Ansprüche 18 - 21.

23. Virtualisiertes Speichermodul nach einem der Ansprüche 18 - 21.

24. Computerprogrammprodukt mit Programmbefehlen zur Durchführung des Verfahrens nach einem der Ansprüche 1-18.

25. Bereitstellungsvorrichtung für das Computerprogrammprodukt nach Anspruch 24 wobei die Bereitstellungsvorrichtung das Computerprogrammprodukt speichert und/oder bereitstellt.

## Claims

1. Method (500) for security-protected write processes and/or read processes on a memory module (200, 300, 400), wherein the following method steps are performed:
- transmission (505) of user data to the memory module (200, 300, 400);
- stipulation (510) of a piece of security information in a first memory area (230) of the memory module (200, 300, 400); and
- automatic concomitant update (515) of at least one predefined portion of the security information upon a write access operation for the user data on the memory module (200, 300, 400) and/or upon a prescribed trigger, wherein the memory module (200, 300, 400) determines the concomitantly updated security information automatically;
- checking of the automatically concomitantly updated portion of the security information by means of a checking algorithm on the basis of a predefined check criterion; and
- provision of a signal if the checking algorithm stipulates a critical deviation from the predefined check criterion,
wherein an integrity value for all data or for a portion of the data, particularly of the user data, of the memory module (400) is stored in a third memory area (410) of the memory module (400), wherein the integrity value is produced particularly in automated fashion by the memory module (400) upon storage of the user data on the memory module (400), wherein the integrity value is provided particularly by the memory module (400),
**characterized in that**
the signal puts a device (600) in which the memory module (200, 300, 400) is installed into a security mode.

2. Method (500) according to Claim 1, wherein the stored security information is overwritten during the concomitant update (515).

3. Method (500) according to Claim 1 or 2, wherein
- in addition to the user data, a piece of tag information is transmitted,
- the tag information comprises particularly memory addresses and/or file names, and
- the security information comprises particularly the tag information.

4. Method (500) according to Claim 3, wherein the concomitant update (515) of the security information is effected on the basis of the transmitted tag information.

5. Method (500) according to one of the preceding claims, wherein the security information and/or the user data is/are provided by the memory module (200, 300, 400).

6. Method (500) according to one of the preceding claims, wherein the security information comprises a piece of identification information (232) for the memory module (200, 300, 400).

7. Method (500) according to one of the preceding claims, wherein the signal is transmitted to a central memory monitor via an interface.

8. Method (500) according to one of the preceding claims, wherein the prescribed trigger is any write access to the memory module (200, 300, 400) and/or is completion of a write process on the memory module (200, 300, 400) and/or is activation of a write mode for the memory module, wherein the write mode is preferably initiated by means of a password input.

9. Method (500) according to one of the preceding claims, wherein the portion of the security information that is to be concomitantly updated comprises a piece of write cycle identification information (234) that is implemented particularly as an incremental counter.

10. Method (500) according to one of the preceding claims, wherein the portion of the security information that is to be concomitantly updated comprises a random value that is preferably produced by a memory-module-internal random number generator.

11. Method (500) according to one of the preceding claims, wherein the portion of the security information that is to be concomitantly updated comprises a piece of time-of-day information that is preferably provided by a memory-module-internal realtime clock.

12. Method (500) according to one of the preceding claims, wherein a first checksum for checking the user data is provided by the memory module (300, 400).

13. Method (500) according to one of the preceding claims, wherein a second memory area contains a cryptographic key, wherein the second memory area (310) is writable, preferably a single time.

14. Method (500) according to Claim 13, wherein
- an authentication of the memory module (300, 400) and/or of the user data is performed by means of the cryptographic key,
- the authentication preferably involves the use of a challenge/response protocol, in which a second checksum is computed by means of the cryptographic key for a portion of the user data or for all of the user data, and
- the authentication preferably involves a response to a challenge from the challenge/response protocol comprising the challenge and/or the cryptographic key and/or a portion of the security information or the complete security information.

15. Method (500) according to one of the preceding claims, wherein
- a change to the integrity value prompts the concomitant update (515) to be performed,
- an integrity of the data is checked preferably upon reading by virtue of a further integrity value for all of the data or for the portion of the data being formed, and
- the integrity is confirmed if preferably the integrity value and the further integrity value match sufficiently.

16. Method (500) according to one of the preceding claims, wherein the response additionally comprises the integrity value.

17. Method (500) according to one of Claims 12-16, wherein the first checksum and/or the second checksum is/are formed only using the integrity value.

18. Method (500) according to one of the preceding claims, wherein the first memory area (230) and/or the second memory area (310) and/or the third memory area (410) are located wholly or in part in a protected memory area, and wherein a third party effects only read access to the protected memory area.

19. Memory module (200, 300, 400), having:
- a user data memory area (270) for storing user data;
- a first memory area (230);
- at least one control device (210) for stipulating a piece of security information in the first memory area (230) of the memory module (200, 300, 400) and for automatically concomitantly updating at least one predefined portion of the security information upon a write access operation for the user data on the memory module (200, 300, 400) and/or upon a prescribed trigger, wherein the memory module determines the concomitantly updated security information automatically,
- a checking device for checking the automatically updated portion of the security information on the basis of a predefined check criterion; and
- a provision device for providing a signal if the result of the checking is a sufficient deviation from the predefined checking result,
wherein an integrity value for all data or for a portion of the data, particularly of the user data, of the memory module (400) is stored in a third memory area (410) of the memory module (400), wherein the integrity value is produced particularly in automated fashion by the memory module (400) upon storage of the user data on the memory module (400), wherein the integrity value is provided particularly by the memory module (400),
**characterized in that**
the provision device is configured to provide a signal which puts a device (600) in which the memory module (200, 300, 400) is installed into a security mode.

20. Memory module (200, 300, 400) according to either of Claims 18-19, additionally having:
- a random number generator and/or
- a realtime clock.

21. Memory module (200, 300, 400) according to one of Claims 18-20, wherein the memory module is an EEPROM.

22. Computer system (600) having a memory module according to one of Claims 18-21.

23. Virtualized memory module according to one of Claims 18-21.

24. Computer program product having program commands for performing the method according to one of Claims 1-18.

25. Provision apparatus for the computer program product according to Claim 24, wherein the provision apparatus stores and/or provides the computer program product.

## Revendications

1. Procédé (500) permettant de réaliser une protection des processus d'écriture et/ou des processus de lecture sur un module de mémoire (200, 300, 400), selon lequel les étapes suivantes sont exécutées :
- transmission (505) de données d'utilisateur au module de mémoire (200, 300, 400),
- détermination (510) d'une information de sécurité dans une première zone de mémoire (230) du module de mémoire (200, 300, 400), et
- mise à jour automatique (515) d'au moins une partie prédéfinie de l'information de sécurité lors d'un accès en écriture pour les données d'utilisateur sur le module de mémoire (200, 300, 400) et/ou lors d'un déclenchement prédéterminé, dans laquelle le module de mémoire (200, 300, 400) détermine automatiquement l'information de sécurité mise à jour,
- vérification de la partie automatiquement mise à jour de l'information de sécurité au moyen d'un algorithme de contrôle sur la base d'un critère de contrôle prédéfini, et
- fourniture d'un signal, dans le cas où l'algorithme de contrôle détermine un écart critique du critère de contrôle prédéfini,
dans lequel une valeur d'intégrité sur toutes les données ou sur une partie des données du module de mémoire (400), notamment des données d'utilisateur est stockée dans une troisième zone de mémoire (410) du module de mémoire (400), la valeur d'intégrité est générée, notamment automatiquement par le module de mémoire (400) lors d'un enregistrement des données d'utilisateur sur le module de mémoire (400), et la valeur d'intégrité est préparée notamment par le module de mémoire (400),
**caractérisé en ce que**
le signal met un appareil (600) dans lequel le module de mémoire (200, 300, 400) est intégré dans un mode de sécurité.

2. Procédé (500) selon la revendication 1, dans lequel l'information de sécurité enregistrée durant la mise à jour (515) est enregistrée par écrasement.

3. Procédé (500) selon la revendication 1 ou 2, dans lequel
- en plus des données d'utilisateur, une information de caractérisation est transmise,
- l'information de caractérisation contient notamment des adresses de mémoire et/ou des noms de fichiers, et
- l'information de sécurité comprend notamment l'information de caractérisation.

4. Procédé (500) selon la revendication 3, dans lequel la mise à jour (515) de l'information de sécurité s'effectue en fonction de l'information de caractérisation transmise.

5. Procédé (500) selon l'une des revendications précédentes, dans lequel l'information de sécurité et/ou les données d'utilisateur sont préparées par le module de mémoire (200, 300, 400).

6. Procédé (500) selon l'une des revendications précédentes, dans lequel l'information de sécurité comprend une information d'identification (232) pour le module de mémoire (200, 300, 400).

7. Procédé (500) selon l'une des revendications précédentes, dans lequel le signal est transmis via une interface centrale à une supervision de mémoire.

8. Procédé (500) selon l'une des revendications précédentes, dans lequel le déclenchement prédéterminé est chaque accès en écriture au module de mémoire et/ou est la fin d'un processus d'écriture sur le module de mémoire (200, 300, 400) et/ou une activation d'un mode d'écriture pour le module de mémoire, le mode d'écriture étant initié de préférence au moyen d'une saisie d'un mot de passe.

9. Procédé (500) selon l'une des revendications précédentes, dans lequel la partie à mettre à jour de l'information de sécurité comprend une information d'identification de cycles d'écriture (234) qui est mise en oeuvre en tant que compteur incrémentiel.

10. Procédé (500) selon l'une des revendications précédentes, dans lequel la partie à mettre à jour de l'information de sécurité comprend une valeur aléatoire qui est produite de préférence par un générateur aléatoire interne au module de mémoire.

11. Procédé (500) selon l'une des revendications précédentes, dans lequel la partie à mettre à jour de l'information de sécurité comprend une information d'heure, qui est fournie de préférence par une horloge temps réel intégrée dans le module de mémoire.

12. Procédé (500) selon l'une des revendications précédentes, dans lequel une première somme de contrôle destinée à contrôler les données d'utilisateur est fournie par le module de mémoire (300, 400).

13. Procédé (500) selon l'une des revendications précédentes, dans lequel une clé cryptographique se trouve dans une seconde zone de mémoire, la seconde zone de mémoire (310) étant de préférence inscriptible une seule fois.

14. Procédé (500) selon la revendication 13, dans lequel
- une authentification du module de mémoire (300, 400) et/ou des données d'utilisateur est réalisée au moyen de la clé cryptographique,
- pour l'authentification, on utilise de préférence un protocole de défi-réponse, dans lequel une seconde somme de contrôle est calculée au moyen de la clé cryptographique sur une partie des données d'utilisateur ou sur les données entières d'utilisateur, et
- pour l'authentification, de préférence, une réponse à un défi du protocole de défi-réponse comprend le défi et/ou la clé cryptographique et/ou une partie de l'information de sécurité ou l'information de sécurité complète.

15. Procédé (500) selon l'une des revendications précédentes, dans lequel
- en cas de modification de la valeur d'intégrité, la mise à jour (515) est exécutée,
- l'intégrité des données est contrôlée de préférence lors de la lecture, en créant une autre valeur d'intégrité sur les données entières ou sur une partie des données, et
- l'intégrité est validée lorsque de préférence la valeur d'intégrité et l'autre valeur d'intégrité coïncident suffisamment.

16. Procédé (500) selon l'une des revendications précédentes, dans lequel la réponse comprend en plus la valeur d'intégrité.

17. Procédé (500) selon l'une des revendications 12 à 16, dans lequel la première somme de contrôle et/ou la seconde somme de contrôle sont créées uniquement par la valeur d'intégrité.

18. Procédé (500) selon l'une des revendications précédentes, dans lequel la première zone de mémoire (230) et/ou la seconde zone de mémoire (310) et/ou la troisième zone de mémoire (410) se trouvent entièrement ou partiellement dans une zone de mémoire protégée, et selon lequel la zone de mémoire protégée n'est accessible à un tiers uniquement qu'en mode de lecture.

19. Module de mémoire (200, 300, 400) comprenant :
- une zone de mémoire de données d'utilisateur (270) destinée à stocker des données d'utilisateur,
- une première zone de mémoire (230),
- au moins un moyen de commande (210) permettant de déterminer une information de sécurité dans la première zone de mémoire (230) du module de mémoire (200, 300, 400) et de mettre à jour automatiquement au moins une partie prédéfinie de l'information de sécurité lors d'un accès en écriture pour les données d'utilisateur sur le module de mémoire (200, 300, 400) et/ou lors d'un déclenchement prédéterminé, le module de mémoire déterminant automatiquement l'information de sécurité mise à jour,
- un moyen de contrôle destiné à contrôler la partie automatiquement mise à jour de l'information de sécurité au moyen d'un algorithme de contrôle sur la base d'un critère de contrôle prédéfini, et
- un moyen de préparation destiné à fournir un signal dans le cas où le contrôle détermine un écart suffisant du résultat de contrôle prédéfini, et
dans lequel une valeur d'intégrité sur toutes les données ou sur une partie des données du module de mémoire (400), notamment des données d'utilisateur est stockée dans une troisième zone de mémoire (410) du module de mémoire (400), la valeur d'intégrité est générée, notamment automatiquement par le module de mémoire (400) lors d'un enregistrement des données d'utilisateur sur le module de mémoire (400), et la valeur d'intégrité est préparée notamment par le module de mémoire (400),
**caractérisé en ce que**
le moyen de préparation est conçu de manière à fournir un signal qui met un appareil (600) dans lequel le module de mémoire (200, 300, 400) est intégré dans un mode de sécurité.

20. Module de mémoire (200, 300, 400) selon l'une des revendications 18 à 19, comprenant en outre :
- un générateur aléatoire et/ou
- une horloge temps réel.

21. Module de mémoire (200, 300, 400) selon l'une des revendications 18 à 20, dans lequel le module de mémoire est une EEPROM.

22. Système informatique (600) comprenant un module de mémoire selon l'une des revendications 18 à 21.

23. Module de mémoire virtuel selon l'une des revendications 18 à 21.

24. Produit de programme informatique comportant des instructions de programme destinées à exécuter le procédé selon l'une des revendications 1 à 18.

25. Dispositif de préparation du produit de programme informatique selon la revendication 24, dans lequel le dispositif de préparation stocke et/ou fournit le produit de programme informatique.
